(19) Europäisches Patentamt European Patent Office Office européen des brevets

(11) **EP 4 276 421 B1**

(12) **EUROPEAN PATENT SPECIFICATION**

(45) Date of publication and mention of the grant of the patent:
**31.12.2025 Bulletin 2026/01**

(21) Application number: **23172334.7**

(22) Date of filing: **09.05.2023**

(51) International Patent Classification (IPC):
***G01N 1/22*** *(2006.01)* ***G01N 1/24*** *(2006.01)*
***G01N 1/26*** *(2006.01)* ***G05D 7/00*** *(2006.01)*
***G01F 1/38*** *(2006.01)*

(52) Cooperative Patent Classification (CPC):
**G01F 1/38; G01N 1/2273; G01N 1/24; G01N 1/26; G05D 7/0676;** G01N 2001/245

(54) **PORTABLE SMART FLOW CONTROLLER**

TRAGBARER INTELLIGENTER DURCHFLUSSREGLER

CONTRÔLEUR DE FLUX INTELLIGENT PORTABLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.05.2022 US 202263339819 P**

(43) Date of publication of application:
**15.11.2023 Bulletin 2023/46**

(73) Proprietor: **TSI Incorporated Shoreview, Minnesota 55126 (US)**

(72) Inventors:
• **BAYAZIT, Yilmaz Minneapolis, 55410 (US)**
• **ANDERSON, Tyler Roseville, 55113 (US)**

(74) Representative: **Meissner Bolte Partnerschaft mbB Patentanwälte Rechtsanwälte Postfach 86 06 24 81633 München (DE)**

(56) References cited:
US-A- 5 000 052     US-A- 6 167 107
US-A1- 2012 222 495     US-A1- 2021 368 868
US-B2- 10 222 359

EP 4 276 421 B1

**Description**

FIELD OF THE DISCLOSURE

The present disclosure relates generally to systems and method for measuring and controlling fluid flow. More specifically, the present disclosure relates to measuring and controlling fluid flow through particle counters and/or active air samplers.

BACKGROUND

Particle counters and active air samplers are devices that can be used to measure air quality. Particle counters and active air samplers measure air quality by measuring contaminates within the air. Example environments where particle counters and active air samplers may be used include cleanrooms, laboratories, and healthcare facilities. US6167107A relates to particle sensing equipment and methods and, more particularly, to airflow systems that provide precise volumetric airflow to particle sensing equipment.

SUMMARY

Disclosed herein are systems and methods for measuring and controlling a flow rate through a particle counter or active air sampler. As disclosed herein, a flow is created within a conduit fluidly connected to an instrument at a first velocity. An inlet pressure at an inlet of the instrument and an ambient pressure proximate the instrument are measured. The flow rate through the instrument is determined based on a pressure differential between the inlet pressure and the ambient pressure. The flow rate is increased or decreased when the flow rate is outside a flow rate range.

BRIEF DESCRIPTION OF THE FIGURES

In the drawings, which are not necessarily drawn to scale, like numerals can describe similar components in different views. Like numerals having different letter suffixes can represent different instances of similar components. The drawings illustrate generally, by way of example, but not by way of limitation, various embodiments discussed in the present document.

> FIG. 1 shows a system in accordance with at least one example of this disclosure.
> FIG. 2 shows a manifold in accordance with at least one example of this disclosure.
> FIG. 3 shows a schematic of a system 300 in accordance with at least one example of this disclosure.
> FIG. 4 shows a controller in accordance with at least one example of this disclosure.
> FIG. 5 shows a method in accordance with at least one example of this disclosure.
> FIG. 6 shows a method in accordance with at least one example of this disclosure.

Corresponding reference characters indicate corresponding parts throughout the several views. The exemplifications set out herein illustrate exemplary embodiments of the disclosure, and such exemplifications are not to be construed as limiting the scope of the disclosure in any manner.

DETAILED DESCRIPTION

The current disclosure relates to optical particle counters (OPC), active air samplers (AAS), light scattering airborne particle counters (LSAPC), and the measurement and control of flow through these devices. These particle counters are designed to run at a set flow rate with a set particle detection range. A typical particle counter would have a defined flow rate which may be 2.83, 28.3, 50, 75, or 100 lpm. Also, these particle counters may be used to sample directly from ambient air, sample from a manifold, or sample via high-pressure diffusers (HPD).

In the case of a manifold, when the instrument, which can include a particle counter, active air sampler, etc., gets connected to a manifold, the inlet of the instrument is maintained at pressures below the ambient. A typical vacuum pressure at the inlet of the instrument that is connected to a manifold may be around 86 kPa while the ambient air pressure may be around 97 kPa. The volumetric flow rate at the inlet can be calculated accurately by using the inlet pressure value in addition to the pressure drop through an area downstream of the inlet.

However, an issue arises in a manifold application due to the start-up conditions. When a particle counter is connected to a manifold, it becomes part of the manifold-flow circuit allowing the flow to go through the particle counter even when the particle counter is not running. This means the start-up value of the differential pressure (dp) sensor is higher when the instrument is connected to a manifold. Starting at a higher value, the instrument would incorrectly adjust the flow to achieve the same pressure drop resulting in incorrect flow rates.

To mitigate this situation, the manufacturers use a manifold mode in the instrument. When the instrument is put into this mode, the differential pressure sensor would not zero. The systems and methods disclosed herein eliminate the need for the manifold mode. Using the systems and methods disclosed herein, the instrument can determine when it is connected to a manifold or a high-pressure diffuser (HPD) and correctly calculate and control the flow rates through the instrument.

The systems and methods disclosed herein also account for instrument sampling from gases other than air. With the use of gas selection options, the systems and methods disclosed herein can calculate the appropriate volumetric difference from standard air conditions and adjust the flow appropriately.

The above discussion is intended to provide an overview of subject matter of the present patent application. It is not intended to provide an exclusive or exhaustive explanation of the invention. The description below is included to provide further information about the present patent application.

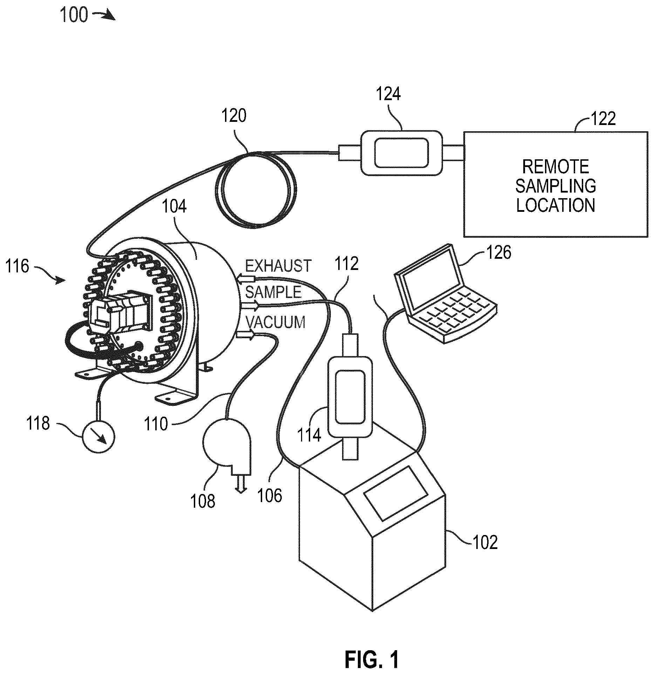

Turning now to the figures, FIG. 1 shows a system 100 in accordance with at least one example of this disclosure. System 100 may include an air sampler 102 that may be connected to a manifold 104 via a conduit 106. During use, a vacuum source 108, such as a blower or vacuum pump, connected to manifold 104 via a conduit 110 may create a negative pressure within manifold 104. The negative pressure may cause a fluid, such as air or other gases, to flow into sampler 102 via a conduit 112 (e.g., an inlet conduit) and exit sampler 102 via conduit 106 (e.g., an exhaust conduit). The gas flowing into sampler 102 may flow through a flow meter 114.

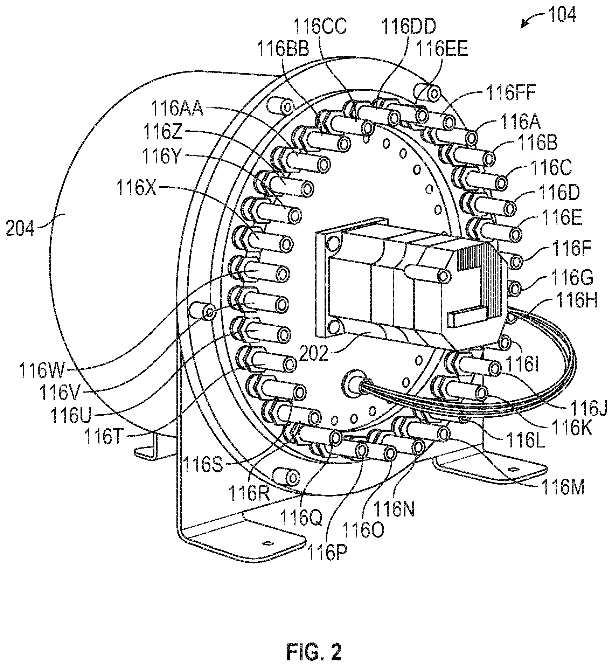

Manifold 104 may include a plurality of inlets 116 (labeled individually as inlets 116A, 116B, . . . 116FF; see FIG. 2). One of inlets 116, such as inlet 116N, may be a port that allows for a pressure measure within manifold 104 to be measures, such as by a connection to a pressure gauge 118. Pressure gauge 118 may be used to measure the pressure inside manifold 104. Pressure gauge 118 may measure a gauge pressure or an absolute pressure. Inlets 116 may also allow manifold 104 to connect to various conduits that may allow for sampling at various locations. For example, a conduit 120 may extend from a remote location 122 to manifold 104 to allow sampling from remote location 122. A flow meter 124 may be located proximate remote location 122 or manifold 104 for use in controlling the flow through conduit 120 as disclosed herein. FIG. 1 shows a single conduit 120 and a single remote location 122 for clarity. Any number of conduits may be connected to manifold 104. In addition, system 100 may include additional manifolds, which in turn may be connected to additional conduits.

Pressure gauge 118 and sampler 102, may be connected to a controller 126. Controller 126 may be a computer, a controller, such as a proportional integral derivative (PID) controller, a programmable logic controller (PLC), etc. During operation, pressure sensors, such as pressure gauge 118, flow meters 114 and 124 may transmit one or more signals, either discrete signals or continuous signals to controller 126. Controller 126 may utilize equations and/or lookup tables to convert the signals, such as voltage, current, or resistance measurements) into pressure measurement, which may then be converted into flow rate (mass or volumetric) measurements as disclosed herein.

During operation, controller 126 may transmit a signal, e.g., a voltage, to vacuum source 108. Actuation of vacuum source 108 may draw air, or any other gas, from sample location 122 and into sampler 102. As the air flows through system 100, controller 126 may receive continuous or discrete signals from pressure gauge 118 and flow meters 114 and 124. Based on the pressure readings from pressure gauge 118 and flow meters 114 and 124, controller 126 can adjust the flow rate of the air through system 100 by adjusting the signal transmitted to vacuum source 108.

FIG. 2 shows manifold 104 in accordance with at least one example of this disclosure. Manifold 104 may include inlets 116 as disclosed herein. During operation, a motor 202 may be actuated by controller 126. Actuation of motor 202 may cause one or more baffles, valves, or other flow control devices withing a housing 204 of manifold 104 to open, close, or otherwise allow the air to flow through a particular one of inlets 116. As a result, manifold 104 allows systems 100 to collect samples from multiple locations using a single sampler. For example, manifold 104 may allow sampler 102 to be located in a central location and sample gases from remote locations, such as different areas of a cleanroom facility, via multiple conduits that connect the remote locations to manifold 104.

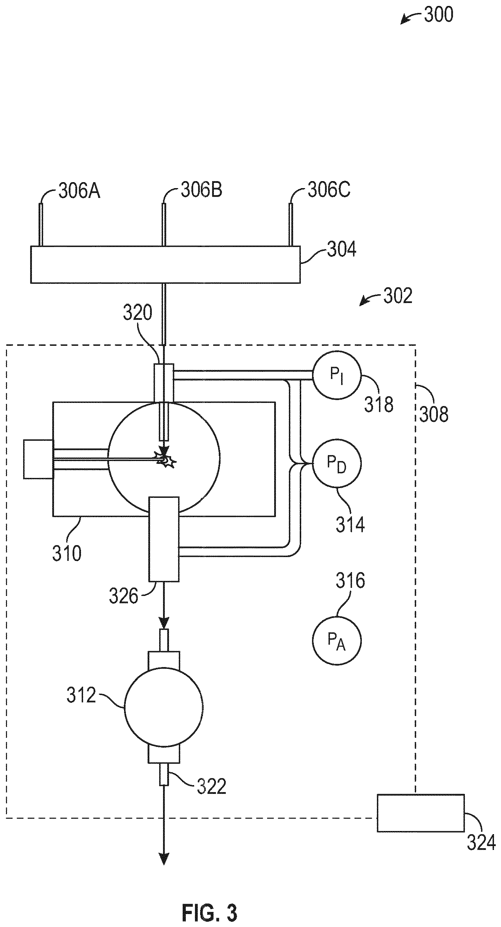

FIG. 3 illustrates a schematic for a system 300 for measuring and/or controlling a flow in accordance with at least one example of this disclosure. System 300 may include an instrument 302 that may be connected to a manifold 304. An example of manifold 304 may be manifold 104 described herein. Manifold 304 may be connected to a plurality of conduits 306 (labeled individually as conduits 306A, 306B, and 306C). Conduits 306 may allow instrument 302 to sample air or other gasses from multiple locations as disclosed herein.

Instrument 302 may include a housing 308. Located inside housing 308 may be a particle counter 310, a vacuum source 312, a differential pressure transducer 314, an ambient pressure transducer 316, and an inlet pressure transducer 318. Vacuum source 312 may be a pump, blower, or other device capable of creating a vacuum within to draw a sample through conduits 306 and into an inlet 320 of particle counter 310. For example, vacuum source 312 can be located downstream from particle counter 310 and create a vacuum upstream of particle counter 310 to draw the sample into instrument 302 via any of conduits 306. After flowing through system 300, the sample can be expelled from instrument 302 via an exhaust 322. Venturi tubes, flow constrictions, static or adjustable, may be located downstream of particle counter 310 to assist in regulating flow rates of the sample through instrument 302.

Instrument 302 may be connected to a controller 324. Controller 324 may be a PID, PLC, or other controller as disclosed herein. Controller 324 may be located exterior to housing 308 or interior to housing 308. Pressure transducers 314, 316, and 318 can be electrically coupled to controller 324 via wired or wireless connections.

Pressure transducers 316 and 318 can measure absolute pressures. For example, pressure transducer 318 can measure absolute pressure and pressure transducer 316 can measure the ambient pressure. Differential pressure transducer 314 can directly measure the pressure differential between inlet 320 and an exhaust 326 of particle counter 310.

Each of the pressure transducers 314, 316, and 318 can transmit a signal (e.g., an electric and/or electromagnetic signal) to controller 324, which can in turn convert the signal to a pressure using a calibration equation or lookup tables. Controller 324 can use the various pressures, pressure differentials, and intensive properties of the fluid (e.g., the density) to calculate the flow rate, volumetric flow rate and/or mass flow rate, using Eqs. 1-10 disclosed below. The intensive properties of the fluid can be stored in a memory of controller 324 or calculated using appropriate thermodynamic state equations or lookup tables.

As disclosed herein, vacuum source 312 may be controlled to deliver a preset flow rate. For example, vacuum source 312 can be driven by controller 324 to deliver a flow rate of X liters per minute. For instance, to maintain a specific flow rate, controller 324, which can be a PID controller, can drive a motor of vacuum source 312 using the output of the flow measurement as part of a control loop. Controller 324 can drive the flow to the set point. Should the flow not be maintained to within, for example, +/-5% of the specific flow rate an alarm can be indicated, a voltage and/or current supplied to the motor of vacuum source 312 can be increased and/or decreased as appropriate to adjust the flow rate.

As disclosed herein, controller 324 can continuously receive signals from the pressure transducers 314, 316, and 318 during operation and monitor the flow rate. For example, using the ambient pressure in conjunction with the other pressure measurements and intensive properties of the fluid, when the manifold is changed to sample from a different location, the flowrate can be monitored and changed to compensate for head losses or other changes in the flow characteristics. For instance, the manifold may change so that the instrument is sampled from a first atmosphere that is composed mainly of an inert gas (helium, argon, etc.) to a second atmosphere that is composed mainly of atmospheric air, which is composed of mainly nitrogen, oxygen, water vapor, and carbon dioxide. In addition, the conduit leading from the first atmosphere may be longer than, and thus have greater head losses, than the conduit leading from the second atmosphere.

As disclosed herein, controller 324 can transmit signals to vacuum source 312 to alter the flow rate. For example, if the flow rate exceeds a preset flow rate then controller 324 can transmit a signal to retard vacuum source 312 and/or actuate a valve to lower the flow rate. Should the flow rate be less than a preset flow rate then controller 324 can transmit a signal to increase a motor speed of vacuum source 312 and/or actuate a valve to increase the flow rate through instrument 302.

As disclosed herein, the inlet pressure (as measured by pressure transducer 318) can allow controller 324 to maintain a desired flow rate while instrument 302 is connected to manifold 304 without the need for a special manifold setting. The Bernoulli equation, shown as Eq. 1, and the Conservation of Mass, simplified and shown in Eq. 2, can be used to determine a flow rate through instrument 302.

Using substitutions, the Bernoulli equation can be solved to determine the velocity at inlet 320 in terms of parameters of instrument 302, such as properties of a venturi tube or other flow constriction that may be a component of instrument 302.

$$p_{inlet} + \frac{\rho v_{inlet}^2}{2} = p_{throat} + \frac{\rho v_{throat}^2}{2} \qquad (Eq.1)$$

$$A_{inlet} * v_{inlet} = A_{throat} * v_{throat} \qquad (Eq.2)$$

In Eqs. 1 and 2, *p* is the pressure of the fluid, $\rho$ is the density of the fluid, v is the velocity of the fluid, *A* is the area, and *throat* represents a throat of a venturi tube. Eq.2 can be substituted into Eq.1 to eliminate one unknown.

$$p_{inlet} + \frac{\rho v_{inlet}^2}{2} = p_{throat} + \frac{\rho * (\frac{A_{inlet} * v_{inlet}}{A_{throat}})^2}{2} \qquad (Eq.3)$$

Now, Eq.3 can be further simplified to determine velocity at inlet 320 as shown in Eqs. 4A, 4B, and 4C.

$$p_{inlet} - p_{throat} = \frac{\rho * (\frac{A_{inlet} * v_{inlet}}{A_{throat}})^2}{2} - \frac{\rho v_{inlet}^2}{2} \qquad (Eq.4A)$$

$$\Delta p = \frac{\rho * (\frac{A_{inlet} * v_{inlet}}{A_{throat}})^2}{2} - \frac{\rho v_{inlet}^2}{2} \qquad (Eq.4B)$$

$$v_{inlet} = \sqrt{\frac{2 * \Delta p}{\rho}} * \sqrt{\frac{1}{\left(\frac{A_{inlet}}{A_{throat}}\right)^2 - 1}} \qquad (Eq.4C)$$

The volumetric flow rate at inlet 320 can be calculated as shown in Eq. 5.

$$Q_{inlet} = A_{inlet} * v_{inlet} \qquad (Eq. 5)$$

Q is the volumetric flow rate. Now Eq.4C can be substituted into Eq.5 as shown in Eq. 6.

$$Q_{inlet} = \sqrt{\frac{2 * \Delta p}{\rho}} * \sqrt{\frac{A_{inlet}^2}{\left(\frac{A_{inlet}}{A_{throat}}\right)^2 - 1}} \qquad (Eq.6)$$

Now that the volumetric flow at inlet 320 is calculated, volumetric flow at the head (i.e., upstream of particle counter 310 a inlets to conduits 306) can also be calculated using mass conservation (Eq. 7) and Ideal Gas Law (Eq. 8).
From mass conservation:

$$\rho_{amb} * Q_{head} = \rho_{inlet} * Q_{inlet} \qquad (Eq.7)$$

From Ideal Gas Law, the density of the fluid is directly proportional to pressure as:

$$p = \rho R T \qquad (Eq.8)$$

The density at each location within system 300 can be calculated and used with Eq. 6 to calculate the flow rate as shown in Eq. 9 or the density terms can be replaced with the pressure at each location as shown in Eq. 10.

$$Q_{head} = \frac{p_{inlet} * Q_{inlet}}{p_{amb}} = \frac{p_{inlet}}{p_{amb}} * \sqrt{\frac{2 * \Delta p}{\rho}} * \sqrt{\frac{A_{inlet}^2}{\left(\frac{A_{inlet}}{A_{throat}}\right)^2 - 1}} \qquad (Eq.9)$$

Finally, substituting Eq.6 into Eq.9, we arrive at the flow at the head.

$$Q_{head} = C_d \frac{p_{inlet}}{p_{amb}} * \sqrt{\frac{2 * \Delta p}{\rho}} * \sqrt{\frac{A_{inlet}^2}{\left(\frac{A_{inlet}}{A_{throat}}\right)^2 - 1}} \qquad (Eq.10)$$

The coefficient of discharge, $C_d$, is calculated during the flow calibration of the instrument. For instruments where the flow needs to be accurate upstream of the $\Delta p$ measurement location the $P_{inlet}/P_{amb}$ term is used. An example of this type of instrument 302 includes an active air sampler. In an active air sampler the head where the impaction takes place is where the flow accuracy needs to be maintained. For optical particle counters where the measurement needs to be accurate at the inlet of the instrument, the term $P_{inlet}/P_{amb}$ is set to 1. In addition, when different type of gases are used the density can be calculated and corrected based on the gas constant. Thus, using the equations above and, the flow rate of air or other gasses can be determined within system 300.

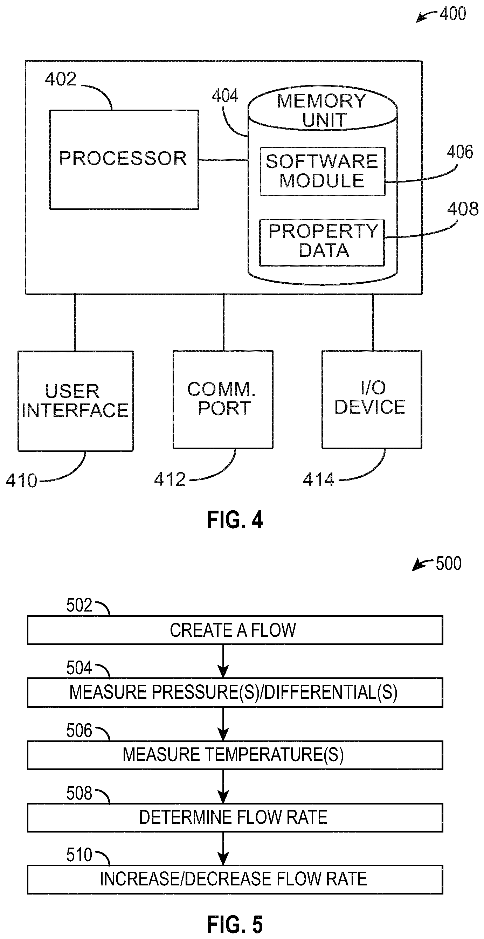

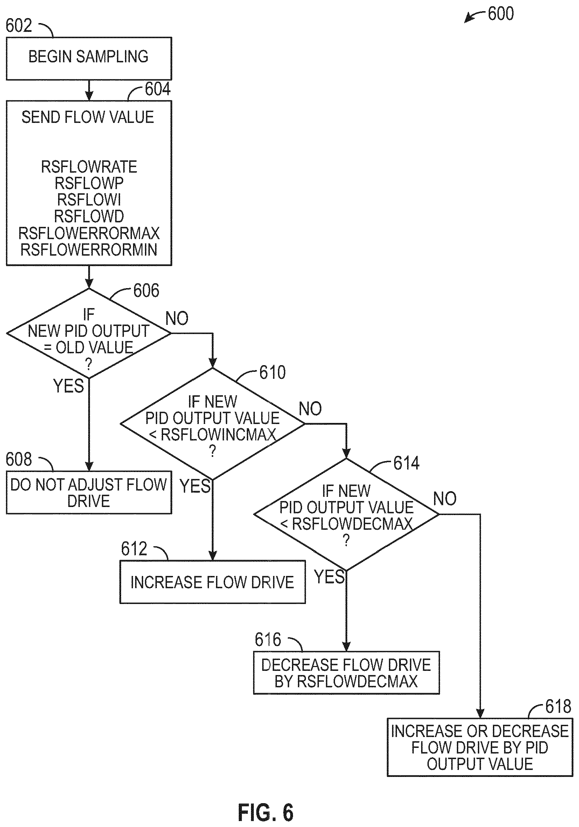

FIG. 4 shows a schematic of a controller 400 in accordance with at least one example of this disclosure. Controller 400 can be used to implement controllers 126 and 324. Controller 400 can include a processor 402 and a memory 404. Memory 404 can include a software module 406 and property data 408. While executing on processor 402, software module 404 can perform a process or processes for measuring and/or controlling a flow rate of a fluid through a system, including, for example, one or more stages included in methods 500 and/or 600 described below with respect to FIGS. 5 and 6. Controller 400 can also include one or more user interfaces 410, one or more communications ports 412, and one or more input/output (I/O) devices 414.

As disclosed herein, software module 406 can include instructions that, when executed by processor 402, cause controller 400 to receive signals. For example, pressure transducers, such as those described herein, can transmit signals to controller 400, which can be received via I/O devices 414 or communications ports 412. The instructions, when executed by processor 402, can cause controller to transmit signals. For example, controller 400 can transmit signals to user interfaces 410, communications ports 412, and/or I/O devices 414 to activate alarms, display system information, control a valve to turn the flow on or off, or control pumps/vacuum sources, etc.

Property data 408 can include intensive property data for the fluid as well as properties of venturi tubes and other components of the systems disclosed herein. For example, property data 408 can include lookup tables or equations used to convert signals, such as voltages, received from pressure and/or pressure transducers to pressures and/or temperatures. In addition, property data 408 can include the diameter of a venturi tube inlet, exit, and throat section. Other non-limiting examples of property data 408 can include operating vacuum pressures, desired flow rates, and/or desired or preset flow rate ranges at which the various systems disclosed herein are to operate.

User interface 410 can include any number of devices that allow a user to interface with controller 400. Non-limiting examples of user interface 410 include a keypad, a microphone, a display (touchscreen or otherwise), etc.

Communications port 412 may allow controller 400 to communicate with various information sources and devices, such as, but not limited to, remote computing devices such as servers or other remote computers, mobile devices such as a user's smart phone, peripheral devices, etc. Non-limiting examples of communications port 412 include, Ethernet cards (wireless or wired), Bluetooth® transmitters and receivers, near-field communications modules, etc.

I/O device 414 may allow controller to receive and output information. Non-limiting examples of I/O device 414 include, pressure and temperature transducers, alarms (visual and/or audible), cameras (still or video), etc.

FIG. 5 shows a method 500 for controlling a flow and measuring a flow rate in accordance with at least one example of this disclosure. Method 500 may begin at stage 502 where a flow may be created. For example, as disclosed herein, a vacuum source may create a vacuum to draw a fluid through one or more conduits, which are fluidly connected to an instrument via a manifold, at a first velocity.

While the fluid is flowing through the instrument various pressures and pressure differentials may be measured (504). For example, an inlet pressure at an inlet of the instrument and the ambient pressure proximate the instrument may be measured. In addition, a pressure differential between the inlet of the instrument and an exhaust of the instrument may be measured. For example, the various pressure transducers may transmit signals to a controller, which may convert the signals to pressure measurements.

In addition to pressures, the temperature of the fluid flowing through the instrument may be measured (506). For example, one or more temperature transducers may be located proximate the inlet to the instrument and/or inside the instrument. The temperature transducers may transmit signals as disclosed herein so that a controller may determine the temperature of the fluid.

Using the various pressure and/or temperature measurements, a flow rate through the instrument may be determined (508). The flow rate may be a mass flow rate or a volumetric flow rate. For example, using the temperature and pressure of a gas flowing through the system the density of the gas may be determined using the Ideal Gas Law. Using the density, an intensive property of the gas, the flow rate, such as a mass flow rate, may be determined using Equations 1-10 above.

Based on the determined flow rate, an adjustment may be made to the flow rate (510). For example, the flow rate may be increased or decreased when the flow rate is outside a flow rate range. Increasing or decreasing the flow rate may include correcting the flow rate using the density of the gas as a correction factor. For example, when the flow rate is a mass flow rate, when the density of the gas changes, the flow rate may be changed proportionally to the change in the density of the gas.

As disclosed herein, method 500 may continuously repeat so that the flow rate can be monitored and adjustments made as environmental conditions change and/or the changes to the system result in deviations of the flow rate. For example, as disclosed herein, the manifold may allow for different locations to be sampled with a single instrument. As the manifold is reconfigured to sample from one location to another, the characteristics of the conduits connecting the various locations may cause a change in the flow rate for a giving power setting of the vacuum source. As a high or low pressure weather system moves through the area, the ambient temperature and/or pressure may change, thus altering the flow rate for a given power setting of the vacuum source. Method 500 may allow for the flow rate to be adjusted to compensate for the changing conditions.

FIG. 6 illustrates a method 600 in accordance with at least one example of this disclosure. Method 600 can begin at stage 602 where sampling may begin. Sampling may include creating a vacuum and/or otherwise causing a fluid to flow through an instrument, such as a particle counter or active air sampler as disclosed herein.

As the fluid flows through the system, flows values may be processed via a controller as disclosed herein (604). For example, various transducers may transmit signals to a PID controller that is implementing method 600. The various flow values may be parameters of the flow. For example, the flow values may include flow rates as measure by flow measuring devices, pressures measured by pressure transducers, temperatures measured by temperature transducers. In addition, the flow values may include calculated values, such as mass flow rates, volumetric flow rates, etc.

The flow values may also include values retrieved from a memory, such as flow rate error minimum and maximum values. The minimum and maximum values may specify a range for the flow rate and/or a maximum deviation from a desired flow rate. For example, the flow error may specify that the flow may deviate from a desired flow rate by an absolute value, such as about 0.25 lpm, and/or by a percentage of the flow rate, such as +/- 2.5% of the mean flow rate.

At decision block 606 a determination can be made as to if the current flow values (one or all of the flow values) has deviated from a previous reading/calculation of the flow values. If there is has been no deviation (i.e., the flow values are the same), the method 600 may proceed to stage 608 where the driver of the flow (e.g., a vacuum source) is not adjusted. Stated another way, if the flow has not deviated from desired flow conditions, then the flow is not adjusted.

If the one or more of the flow values has deviated from a previous reading, method 600 may proceed to decision block 610 where a determination can be made as to if a PID output value (i.e., a flow value) is greater than a flow increase maximum. For example, if the PID output value indicates the flow rate has decreased below a value, *RSFLOWINCMAX,* that may indicate a maximum the flow rate may decrease before the flow rate needs to be increased. When the PID out value indicated the flow rate has decreased, the flow driver may be increased (612). For example, when the flow rate decreases, the driver of the flow may be increased by *RSFLOWINCMAX* to increase the flow rate.

If the flow values are not greater than the flow increase maximum, method 600 may proceed to decision block 614 where a determination can be made as to if a PID output value (i.e., a flow value) is less than a flow decrease maximum. For example, if the PID output value indicates the flow rate has increase above a value, *RSFLOWDECMAX,* that may indicate a maximum the flow rate may increase before the flow rate needs to be decreased. When the PID out value indicated the flow rate has increased, the flow driver may be decreased (616). For example, when the flow rate increases, the driver of the flow may be decreased by *RSFLOWDECMAX* to decrease the flow rate.

An example of when the PID value may be greater than the *RSFLOWDECMAX* or the *RSFLOWINCMAX* may be when the manifold is changed to allow for sampling from a different location. For example, when change from a first setting to a second setting, the manifold may connect the instrument to a conduit that has a larger head loss, which in turn may cause the flow rate to decrease quickly. Another instance may be during initial start up as the system operates with transient flow until reaching steady state conditions. By increasing or decreasing the flow by *RSFLOWDECMAX* or the *RSFLOWINCMAX* the PID controller may gradually approach the desired flow rate (i.e., a steady state condition), without overshooting the desired flow rate.

If the flow values are not greater than the flow decrease maximum, the flow may be increased or decrease by the PID value to maintain the flow rate at the desired flow rate (618). By increasing or decreasing the flow rate by the PID value, the flow rate may be incrementally adjusted before a large deviation may occur. By avoiding large deviations, spikes or other surges in the flow conditions may be avoided.

In an example, the PID controller may determine when the instrument is operating in a sampling mode and when the instrument is not operating in a sampling mode. When the instrument is not operating in a sampling mode, such as during a transition from a first state to a second state by the manifold, the PID controller may allow the flow rate to vary. Once the PID controller determines the instrument is operating in a sampling mode, the PID controller may control the flow using the PID values as disclosed herein.

One skilled in the art will understand, in view of this disclosure, that various stages of methods 500 and 600 may be rearranged, omitted, and/or combined with one another without departing from the scope of this disclosure. For example, the temperature measurements in method 500 may be omitted, method 500 or method 600 may be a subroutine of one another, etc. without departing from the scope of this disclosure.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects. The scope of the invention should be determined with reference to the appended claims.

**EP 4 276 421 B1**

**Claims**

1. A method for controlling a flow and measuring a flow rate of the flow through an instrument (302) connected to a manifold (104, 304), the method comprising:

   creating the flow within a conduit (306) fluidly connected to the instrument (302) at a first velocity;
   measuring an inlet pressure at an inlet of the instrument (302);
   measuring an ambient pressure proximate the instrument (302);
   determining the flow rate through the instrument (302) based on a pressure differential between the inlet pressure and the ambient pressure; and
   increasing or decreasing the flow rate when the flow rate is outside a flow rate range.

2. The method of claim 1, wherein determining the flow rate through the instrument (302) includes determining the flow rate based on an intensive property of the fluid.

3. The method of claim 1, wherein the fluid is a gas and the method further comprise:

   calculating the density of the gas; and
   correcting the flow rate using the density of the gas as a correction factor.

4. The method of claim 3, wherein the flow rate is a volumetric flow rate calculated using the density of the gas.

5. The method of claim 1, wherein creating the flow within the conduit includes creating the flow through one of a plurality of ports of the manifold.

6. The method of claim 1, further comprising determining when the instrument (302) is operating in a sampling mode.

7. The method of claim 1, wherein determining the flow rate through the instrument (302) includes determining a mass flow rate through the instrument (302).

8. The method of claim 1, further comprising:

   determining a temperature of the fluid; and
   correcting the flow rate based on a correction factor that is temperature dependent.

9. The method of claim 1, wherein the instrument (302) is an active air sampler.

10. The method of claim 1, wherein the instrument (302) is a particle counter.

11. A system for controlling a flow rate of a flow of a fluid through an instrument (302), the system comprising:

   the instrument (302) having an inlet (320), an exit (322), and a throat (326) located between the inlet (302) and the exit (322);
   a first pressure transducer (318) operative to measure a pressure upstream of the inlet (320) of the instrument (302);
   a second pressure transducer (316) operative to measure an ambient pressure proximate the instrument (302);
   a differential pressure transducer (314) operative to sense a pressure differential between the throat (326) and a point upstream of the inlet (320) of the instrument (302);
   a controller (324) in electrical communication with the differential pressure transducer (314) and the first pressure transducer (318), the controller (324) operative to perform actions comprising:

      creating the flow within a conduit (306) fluidly connected to the instrument (302) at a first velocity;
      converting a signal from the first pressure transducer (318) into the pressure upstream of the inlet (320);
      converting a signal from the second pressure transducer (316) into the ambient pressure (316);
      converting a signal from the differential pressure transducer (314) into the pressure differential;
      determining the flow rate through the instrument (302) based on the pressure differential, the pressure upstream of the inlet (320) and the ambient pressure; and
      increasing or decreasing the flow rate when the flow rate is outside a flow rate range.

12. The system of claim 11, further comprising a manifold operative to fluidly connect the inlet of the instrument (302) to a plurality of conduits, each of the plurality of conduits fluidly connecting the system to a respective sampling location during operation.

13. The system of claim 11, wherein creating the flow comprises creating the flow through one of the respective plurality of conduits.

14. The system of claim 11, wherein determining the flow rate through the instrument (302) includes determining the flow rate based on an intensive property of the fluid retrieved from a memory.

15. The system of claim 11, wherein the flow rate is a volumetric flow rate.

16. The system of claim 11, further comprising a temperature transducer, wherein the fluid is a gas and the actions further comprise:

converting a signal from the temperature transducer into a temperature of the fluid;
calculating a density of the gas based on the temperature of the fluid; and
correcting the flow rate using the density of the gas.

17. The system of claim 16, wherein determining the flow rate through the instrument (302) includes determining a mass flow rate through the instrument (302) using the density of the gas.

18. The system of claim 11, further comprising determining when the instrument (302) is operating in a sampling mode.

19. The system of claim 11, wherein the instrument (302) is an active air sampler.

20. The system of claim 11, wherein the instrument (302) is a particle counter.


**Patentansprüche**

1. Verfahren zum Regelung eines Durchflusses und Messung einer Durchflussrate des Durchflusses durch ein Instrument (302), das mit einem Verteiler (104, 304) verbunden ist, das Verfahren umfassend:

Erzeugen eines Durchflusses innerhalb einer Leitung (306), die mit dem Instrument (302) in Fluidverbindung steht, mit einer ersten Geschwindigkeit;
Messen eines Einlassdrucks an einem Einlass des Instruments (302);
Messen eines Umgebungsdrucks des Instruments (302);
Bestimmen der Durchflussrate durch das Instrument (302) basierend auf einer Druckdifferenz zwischen dem Einlassdruck und dem Umgebungsdruck; und
Erhöhen oder Verringern der Durchflussrate, wenn die Durchflussrate außerhalb eines Durchflussratenbereichs liegt.

2. Verfahren nach Anspruch 1, wobei das Bestimmen der Durchflussrate durch das Instrument (302) Bestimmen der Durchflussrate basierend auf einer intensiven Eigenschaft des Fluids aufweist.

3. Verfahren nach Anspruch 1, wobei das Fluid ein Gas ist und das Verfahren ferner umfasst

Berechnen der Dichte des Gases; und
Korrigieren der Durchflussrate unter Verwendung der Dichte des Gases als Korrekturfaktor.

4. Verfahren nach Anspruch 3, wobei die Durchflussrate eine volumetrische Durchflussrate ist, die unter Verwendung der Dichte des Gases berechnet wird.

5. Verfahren nach Anspruch 1, wobei das Erzeugen des Durchflusses innerhalb der Leitung Erzeugen des Durchflusses durch einen von einer Mehrzahl von Anschlüssen des Verteilers aufweist.

6. Verfahren nach Anspruch 1, ferner umfassend Bestimmen, wann das Instrument (302) in einem Probenahmemodus arbeitet.

7. Verfahren nach Anspruch 1, wobei das Bestimmen der Durchflussrate durch das Instrument (302) Bestimmen einer Massendurchflussrate durch das Instrument (302) aufweist.

8. Verfahren nach Anspruch 1, ferner umfassend:

Bestimmen einer Temperatur des Fluids; und
Korrigieren der Durchflussrate basierend auf einem temperaturabhängigen Korrekturfaktor.

9. Verfahren nach Anspruch 1, wobei das Instrument (302) ein aktiver Luftprobenehmer ist.

10. Verfahren nach Anspruch 1, wobei das Instrument (302) ein Partikelzähler ist.

11. System zur Regelung einer Durchflussrate eines Fluids durch ein Instrument (302), das System umfassend:

dem Instrument (302) mit einem Einlass (320), einem Auslass (322) und einer zwischen dem Einlass (302) und dem Auslass (322) angeordneten Verengung (326);
einem ersten Druckmessumformer (318), der dazu eingerichtet ist, den Druck stromaufwärts des Einlasses (320) des Instruments (302) zu messen;
einem zweiten Druckmessumformer (316), der dazu eingerichtet ist, den Umgebungsdruck des Instruments (302) zu messen;
einem Differenzdruckmessumformer (314), der dazu eingerichtet ist, einen Druckunterschied zwischen der Verengung (326) und einer Stelle stromaufwärts des Einlasses (320) des Instruments (302) zu messen;
eine Regelung (324) in elektrischer Verbindung mit dem Differenzdruckmessumformer (314) und dem ersten Druckmessumformer (318), wobei die Regelung (324) ist in der Lage, Aktionen durchzuführen, die umfassen:

Erzeugen eines Durchflusses innerhalb einer Leitung (306), die mit dem Instrument (302) in Fluidverbindung steht, mit einer ersten Geschwindigkeit;
Umwandeln eines Signals des ersten Druckmessumformers (318) in den Druck stromaufwärts des Einlasses (320);
Umwandeln eines Signals des zweiten Druckmessumformers (316) in den Umgebungsdruck (316);
Umwandeln eines Signals des Differenzdruckmessumformers (314) in die Druckdifferenz;
Bestimmen der Durchflussrate durch das Instrument (302) basierend auf der Druckdifferenz, dem Druck stromaufwärts des Einlasses (320) und dem Umgebungsdruck; und
Erhöhen oder Verringern der Durchflussrate, wenn die Durchflussrate außerhalb eines Durchflussratenbereichs liegt.

12. System nach Anspruch 11 ferner umfassend einen Betriebsverteiler, der dazu eingerichtet ist, den Einlass des Instruments (302) fluidverbindend mit einer Mehrzahl von Leitungen zu verbinden, wobei jede der Mehrzahl von Leitungen das System während des Betriebs fluidverbindend mit einer jeweiligen Probenahmestelle verbindet.

13. System nach Anspruch 11, wobei das Erzeugen des Durchflusses Erzeugen des Durchflusses durch eine jeweilige der Mehrzahl von Leitungen umfasst.

14. System nach Anspruch 11, wobei das Bestimmen der Durchflussrate durch das Instrument (302) Bestimmen der Durchflussrate basierend auf einer aus einem Speicher abgerufenen intensiven Eigenschaft des Fluids aufweist.

15. System nach Anspruch 11, wobei die Durchflussrate eine volumetrische Durchflussrate ist.

16. System nach Anspruch 11, ferner umfassend einen Temperaturmessumformer, wobei das Fluid ein Gas ist und die Aktionen ferner umfassen:

Umwandeln eines Signals des Temperaturmessumformers in eine Temperatur des Fluids;
Berechnen einer Dichte des Gases basierend auf der eine Temperatur des Fluids; und
Korrigieren der Durchflussrate unter Verwendung der Dichte des Gases.

17. System nach Anspruch 16, wobei das Bestimmen der Durchflussrate durch das Instrument (302) Bestimmen einer Massendurchflussrate durch das Instrument (302) unter Verwendung der Dichte des Gases aufweist.

**18.** System nach Anspruch 11, ferner umfassend Bestimmen, wann das Instrument (302) in einem Probenahmemodus arbeitet.

**19.** System nach Anspruch 11, wobei das Instrument (302) ein aktiver Luftprobenehmer ist.

**20.** System nach Anspruch 11, wobei das Instrument (302) ein Partikelzähler ist.

**Revendications**

**1.** Procédé de commande d'un flux et de mesure d'un débit du flux à travers un instrument (302) relié à collecteur (104, 304), le procédé comprenant :

la création du flux à l'intérieur d'un conduit (306) relié fluidiquement à l'instrument (302) à une première vitesse ;
la mesure d'une pression d'entrée au niveau d'une entrée de l'instrument (302) ;
la mesure d'une pression ambiante à proximité de l'instrument (302) ;
la détermination du débit à travers l'instrument (302) sur la base d'une différence de pression entre la pression d'entrée et la pression ambiante ; et
l'augmentation ou la diminution du débit lorsque le débit est en dehors d'une plage de débit.

**2.** Procédé selon la revendication 1, dans lequel la détermination du débit à travers l'instrument (302) inclut la détermination du débit sur la base d'une propriété intensive du fluide.

**3.** Procédé selon la revendication 1, dans lequel le fluide est un gaz et le procédé comprend en outre :

le calcul de la densité du gaz ; et
la correction du débit à l'aide de la densité du gaz en tant que facteur de correction.

**4.** Procédé selon la revendication 3, dans lequel le débit est un débit volumétrique calculé à l'aide de la densité du gaz.

**5.** Procédé selon la revendication 1, dans lequel la création du flux à l'intérieur du conduit inclut la création du flux à travers l'un parmi une pluralité d'orifices du collecteur.

**6.** Procédé selon la revendication 1, comprenant en outre la détermination du fonctionnement de l'instrument (302) dans un mode d'échantillonnage.

**7.** Procédé selon la revendication 1, dans lequel la détermination du débit à travers l'instrument (302) inclut la détermination d'un débit massique à travers l'instrument (302).

**8.** Procédé selon la revendication 1, comprenant en outre :

la détermination d'une température du fluide ; et
la correction du débit sur la base d'un facteur de correction dépendant de la température.

**9.** Procédé selon la revendication 1, dans lequel l'instrument (302) est un échantillonneur d'air actif.

**10.** Procédé selon la revendication 1, dans lequel l'instrument (302) est un compteur de particules.

**11.** Système de commande d'un débit d'un flux d'un fluide à travers un instrument (302), le système comprenant :

l'instrument (302) comportant une entrée (320), une sortie (322), et un col (326) situé entre l'entrée (302) et la sortie (322) ;
un premier transducteur de pression (318) conçu pour mesurer une pression en amont de l'entrée (320) de l'instrument (302) ;
un deuxième transducteur de pression (316) conçu pour mesurer une pression ambiante à proximité de l'instrument (302) ;

un transducteur de pression différentielle (314) conçu pour détecter une différence de pression entre le col (326) et un point en amont de l'entrée (320) de l'instrument (302) ;

un moyen de commande (324) en communication électrique avec le transducteur de pression différentielle (314) et le premier transducteur de pression (318), le moyen de commande (324) étant conçu pour exécuter des actions comprenant :

la création du flux à l'intérieur d'un conduit (306) relié fluidiquement à l'instrument (302) à une première vitesse ;

la conversion d'un signal provenant du premier transducteur de pression (318) en la pression en amont de l'entrée (320) ;

la conversion d'un signal provenant du deuxième transducteur de pression (316) en la pression ambiante (316) ;

la conversion d'un signal provenant du transducteur de pression différentielle (314) en la différence de pression ;

la détermination du débit à travers l'instrument (302) sur la base de la différence de pression, de la pression en amont de l'entrée (320) et de la pression ambiante ; et

l'augmentation ou la diminution du débit lorsque le débit est en dehors d'une plage de débit.

12. Système selon la revendication 11, comprenant en outre un collecteur conçu pour relier fluidiquement l'entrée de l'instrument (302) à une pluralité de conduits, chacun de la pluralité de conduits reliant fluidiquement le système à un point d'échantillonnage respectif pendant le fonctionnement.

13. Système selon la revendication 11, dans lequel la création du flux comprend la création du flux à travers l'un respectif de la pluralité de conduits.

14. Système selon la revendication 11, dans lequel la détermination du débit à travers l'instrument (302) inclut la détermination du débit sur la base d'une propriété intensive du fluide, récupérée à partir d'une mémoire.

15. Système selon la revendication 11, dans lequel le débit est un débit volumétrique.

16. Système selon la revendication 11, comprenant en outre un transducteur de température, dans lequel le fluide est un gaz et les actions comprennent en outre :

la conversion d'un signal provenant du transducteur de température en une température du fluide ;

le calcul d'une densité du gaz sur la base de la température du fluide ; et

la correction du débit à l'aide de la densité du gaz.

17. Système selon la revendication 16, dans lequel la détermination du débit à travers l'instrument (302) inclut la détermination d'un débit massique à travers l'instrument (302) à l'aide de la densité du gaz.

18. Système selon la revendication 11, comprenant en outre la détermination du fonctionnement de l'instrument (302) dans un mode d'échantillonnage.

19. Système selon la revendication 11, dans lequel l'instrument (302) est un échantillonneur d'air actif.

20. Système selon la revendication 11, dans lequel l'instrument (302) est un compteur de particules.

FIG. 1

FIG. 2

FIG. 3

400

402

404

MEMORY
UNIT

PROCESSOR

SOFTWARE
MODULE

406

PROPERTY
DATA

408

USER
INTERFACE

COMM.
PORT

I/O
DEVICE

410

412

414

**FIG. 4**

500

502

CREATE A FLOW

504

MEASURE PRESSURE(S)/DIFFERENTIAL(S)

506

MEASURE TEMPERATURE(S)

508

DETERMINE FLOW RATE

510

INCREASE/DECREASE FLOW RATE

**FIG. 5**

602 ─ BEGIN SAMPLING

604 ─ SEND FLOW VALUE

RSFLOWRATE
RSFLOWP
RSFLOWI
RSFLOWD
RSFLOWERRORMAX
RSFLOWERRORMIN

606 ─ IF NEW PID OUTPUT = OLD VALUE ?

NO

YES

608 ─ DO NOT ADJUST FLOW DRIVE

610 ─ IF NEW PID OUTPUT VALUE < RSFLOWINCMAX ?

NO

YES

612 ─ INCREASE FLOW DRIVE

614 ─ IF NEW PID OUTPUT VALUE < RSFLOWDECMAX ?

NO

YES

616 ─ DECREASE FLOW DRIVE BY RSFLOWDECMAX

618 ─ INCREASE OR DECREASE FLOW DRIVE BY PID OUTPUT VALUE

600

FIG. 6

**EP 4 276 421 B1**

**Patent documents cited in the description**

- US 6167107 A